# EUROPEAN PATENT SPECIFICATION

(11) **EP 1 452 837 B1**
(45) Date of publication and mention of the grant of the patent: **10.12.2008**
(21) Application number: 04075561.3
(22) Date of filing: 20.02.2004
(51) Int. Cl.: G01F 1/26, G01F 1/28, G01F 15/00, F16K 3/00

(54) **Valve for regulating and measuring the flow rate of a fluid**
Ventil zum Regulieren und Messen des Durchflusses eines Fluids
Vanne pour le réglage et la mesure du débit d'un liquide

(30) Priority: 27.02.2003 IT MI20030353
(43) Date of publication of application: 01.09.2004
(73) Proprietor: WATTS INDUSTRIES ITALIA S.r.l., Bolzano (IT); WATTS INDUSTRIES DEUTSCHLAND GmbH, Landau (DE)
(72) Inventor: Motta, Renato, Biassono (IT); Spiess, Fritz, Unterkunkhofen (CH)
(74) Representative: Raimondi, Margherita

(56) References cited:
- EP-A- 1 130 364
- EP-A- 1 201 978
- EP-A- 1 321 746
- WO-A-03/089844
- DE-U- 29 806 215
- US-A- 2 069 309
- US-A- 6 089 264
- US-A1- 2003 015 245

## Description

The present invention relates to a valve for regulating and measuring the flow rate of a fluid through a manifold and a branch pipe inside the said manifold.

It is known in the art relating to the design of fluid distribution networks that there exists the need to provide multiple-path manifolds for the outward/return flow of the fluid to/from the end users; an example of these applications consists in the branched piping for water in heating systems, in particular of the type comprising underground panels.

It is also known that each of the piping branches which depart from the manifold must be equipped with a valve for intercepting and regulating the flow so as to be able to compensate for the varying loss of head which occurs in the different panels owing to their specific dimensions and their distance from the distribution manifold.

Valves which can be applied to said pipes are also known, said valves being able to perform regulation of the flow, effecting at the same time measurement of the latter, said measurement being displayed on a calibrated scale present on the valve body.

Examples of these valves are for example known from DE 35 09 718 which describes a valve which, although performing correctly its dual function (regulation/measurement), nevertheless has a drawback due to the fact that, during regulation, the element for detecting the pressure is movable axially together with the closing body displaying the graduated scale from which the measurement is read.

As a result, in order to obtain a constant measurement upon variation in the flow rate (greater opening/closing of the obturator), the measurement duct must be necessarily designed with a cylindrical shape.

This cylindrical shape, however, gives rise to the drawback that in these conditions it is not possible to obtain a substantially linear measuring scale, resulting in a very closely arranged scale which obviously makes correct reading by the user difficult. In addition to this, the cylindrical duct has a high noise level when the valve is fully open, owing to an increase in the speed of the flow due to the constant cross-section.

In addition to this it is known that the aforementioned systems are provided with a measuring/regulating element (flow meter) on the return branch and the fluid control valve with electrically and/or pneumatically and/or similarly operated actuator on the supply branch.

In this way, however, the main valve operates with the flow directed so as to close the valve and, under high pressure conditions, irreversible closing of the valve could also occur with consequent interruption in the heating.

It is thus possible to envisage arranging the flow meter on the supply branch and the control valve on the return branch, but this solution encounters difficulties due to the fact that the flow meters of the known type are suitable for operation on the return branch namely with the fluid flow which enters into the branch pipe of the manifold, resulting in turbulence and cavitation which are the cause of noise and vibration of the measuring instrument which is no longer able to provide a precise measurement.

In order to solve this type of problem, DE-U-9404156 suggests providing a constriction at the opening where the fluid enters into the valve branch pipe; this solution envisages a bell arranged above the valve seat and able to produce said constriction with the free edge of the said opening of the branch pipe.

IT-MI2001A 2725 in the name of the present Applicant also discloses a valve in which the flow regulating element consists of a core piece which is movable axially with openings arranged on the side surface thereof.

This however results in a valve design which does not solve completely the problems relating to accuracy of the measurement and linearity of the reading taken from the corresponding instrument.

Examples of prior art according to the preamble of the claim 1 are also disclosed into WO 03/089844,EP 1 321 746 AND EP 1 201364.

The technical problem which is posed, therefore, is that of providing a valve for intercepting and regulating the flow in fluid branch pipes, with an instrument for measuring and displaying the value of the said flow incorporated therein, which is suitable for installation on the branch supplying the user of the system and allows effective regulation and measurement of the flow rate, with indication of the measurement which is precise and linear as far as possible.

Within the context of this problem a further requirement is that the valve should consist of a small number of parts and should be easy and inexpensive to manufacture and assemble.

These technical problems are solved according to the present invention by a valve for regulating and measuring the flow rate of a fluid through a manifold and a branch pipe inside the said manifold, according to the characteristics of claim 1.

Further details may be obtained from the following description of a non-limiting example of embodiment of the invention provided with reference to the accompanying drawings, in which:
- Figure 1 shows a view, partially sectioned along a vertical plane, of an example of embodiment of the valve according to the invention in the condition where the valve is closed;
- Figure 2 shows a cross-section along the plane indicated by II-II in Fig. 1;
- Figure 3 shows a detail of an opening for radial entry of the fluid into the branch pipe;
- Figure 4 shows a detailed view of a second opening for radial entry of the fluid into the branch pipe;
- Figure 5 shows a cross-section similar to that of Fig. 1 with the valve in the partially open condition; and
- Figure 6 shows a cross-section similar to that of Fig. 1 with the valve in the totally open condition.

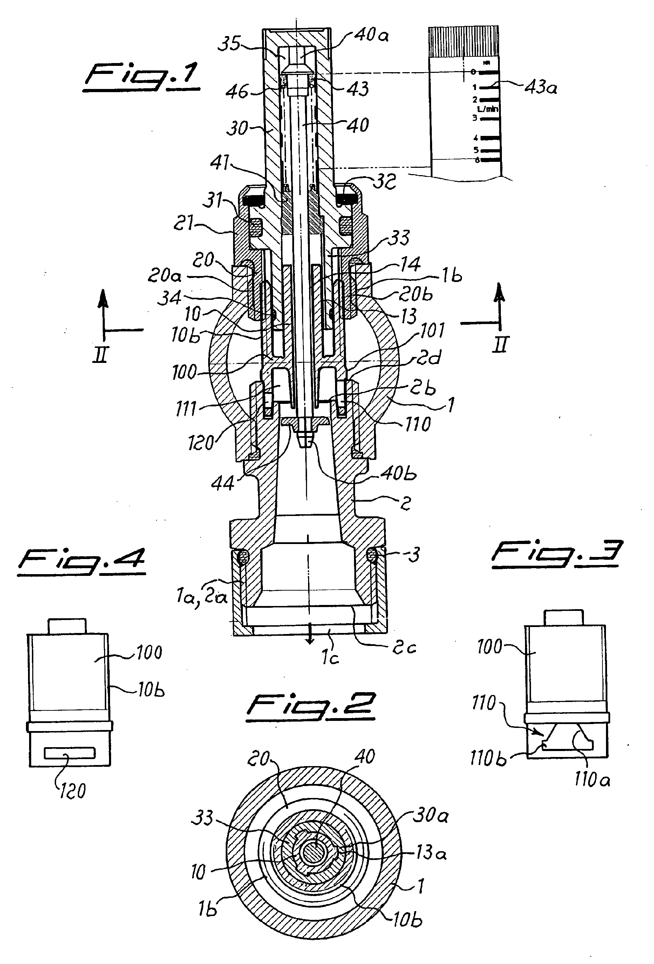

As shown in Fig. 1, a manifold 1 envisages at least one branch pipe 2 which has a substantially frustoconical shape, with the conicity directed from the manifold 1 towards the supply branch 1c of the system, and extends inside the manifold in a direction substantially transverse to that of the fluid flow; in the example shown in the Figure the branch pipe 2 is joined to the manifold 1 by means of a connection consisting of a screw 2a and female thread la with the arrangement of a sealing ring 3 in between.

The free edge 2b corresponding to the smaller base of the branch pipe 2 forms the opening for entry of the fluid into the pipe, while the opposite opening 2c forms the outlet opening of the valve; the fluid flow therefore occurs from the manifold 1 to the branch pipe 2 towards the said supply branch 1c as indicated by the arrow.

The flow rate of the valve may be regulated by means of the head 100 of an obturator 10 which is substantially cylindrical and provided with an external thread 10b suitable for mating with the female thread 20b of a union 20 forming the element for connecting the measuring instrument to the manifold 1, as will be further explained below.

The said head 100 of the obturator 10 has a cylindrical shape which is internally hollow, with the cavity 111 directed towards the branch pipe 2.

The external circumferential surface of the head 100 of the obturator 10 is provided with an annular edge 101 extending radially outwards and able to come into contact with a corresponding seat 2d of the valve formed coaxially with the opening 2b of the branch pipe (2) and along a diameter which is greater than the diameter of said inlet opening 2b.

In greater detail said seat 2d extends in the axial direction so that the plane corresponding to its free edge lies at a height axially greater than the height at which the plane corresponding to the free edge of inlet opening 2b into the pipe 2 lies; in other words, the seat 2d of the valve is upstream of the opening 2b for entry into the branch pipe 2 in the direction of flow of the fluid.

This configuration results in the formation, between the head 110 of the obturator and the seat 2d of the valve, of a calming chamber 130 able to allow the fluid to assume a substantially laminar flow condition before its entry into the branch pipe 2, thereby drastically reducing the cavitation and turbulence affecting the fluid, with improvement in the measuring precision and noiseless operation of the valve during regulation of the flow rate.

The same circumferential surface of said head 100 of the obturator 10 is provided with slits suitable for allowing entry of the fluid into the branch pipe in a radial direction as well as regulation of the flow rate depending on whether the valve is operated so as to open/close it.

As shown in Figs. 3 and 4, said slits have mutually varying shapes; more particularly:
- the first slit 110 has a combined shape consisting of a bottom part 110b which is substantially rectangular and a top part 110a substantially in the form of a trapezium - preferably isosceles trapezium - with its larger base directed towards the outlet opening 2c of the branch pipe 2;
- the second slit 120 has a substantially rectangular shape similar to that of the bottom part 110b of the first slit;
with this configuration of the slits it is possible to obtain a dual regulating effect which will be described more fully below in connection with operation of the valve.

The obturator 10 has a coaxial through-duct 14 and an annular seat 13 extending over a suitable distance in the axial direction on the opposite side to that of the bell 111.

The union 20 has in turn an external thread 20a suitable for mating with a corresponding female screw 1b of the manifold 1.

On the opposite side, in the axial direction, to said thread 1b, the union 20 extends in the form of a cover 21 having, axially engaged therein, an internally hollow stem 30 which is axially inserted into said cover 21 with the arrangement, in between, of an O-ring sealing element 31 and axially restrained to the cover 21 by a reaction washer 32 inserted in a special seat of the cover.

The end 33 of the stem 30 inside the manifold 1 has a shape suitable for mating axially with the corresponding seat 13 of the obturator 10 to which it is constrained with the arrangement of a sealing element 34 in between.

As shown in Fig. 2, the connection between the hollow stem 30 and the seat 13 is achieved by means of radial projections 13a on the obturator 10 which engage in corresponding grooves 30a on the stem 30 so as to produce mutual constraining during rotation, but allow sliding of the obturator 10 in the axial direction.

A movable rod 40 guided by a bush 41 integral with the walls of the said cavity 35 is engaged inside the axial cavity 35 of the stem 30.

Said rod 40 extends axially through the said duct 14 of the obturator 10 into the branch pipe 2 and is movable axially with respect to the stem 30 from a top end-of-travel position in contact with the outer end of the stem 30 into a bottom end-of-travel position defined by a fixed annular locating element 41.

The rod 40 forms essentially the actual measuring instrument of the valve and is, for this purpose, provided at its opposite ends, respectively at its end on the outside 40a and inside 40b of the manifold 1, with a first annular element 43 forming the measurement indicator and a second annular element 44 which forms the element for opposing the through-flow of the fluid and against which the latter exerts the pressure which produces measurement of the flow rate.

Reading of the measurement is performed from a graduated scale 43a, which is printed on the external surface of the stem 30; in order to ensure visibility, from the outside, of the relative position of the indicator 43 with respect to the graduated scale 43a, the part of the stem outside the manifold is conveniently made of transparent material.

The said indicator element 43 and the guide bush 41 have, arranged between them, a spring 46 which is coaxially arranged on the rod 40 and which prevents free falling of the said rod, ensuring at the same time calibration of the instrument.

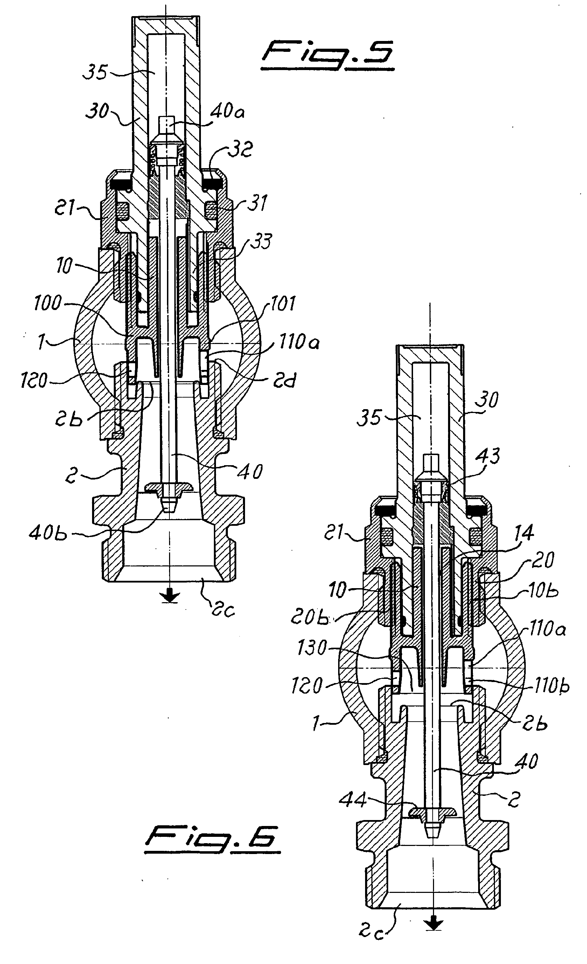

The operating principle of the valve is as follows:
- once the union 20 has been screwed and locked onto the manifold 1 by means of the connection consisting of screw 20a and female thread 1b,
- the stem 30 (Fig. 1) is rotated so as to bring the head 100 of the obturator 10 into an axial position such that the annular edge 101 comes up against the seat 2d, causing closure of the valve; in this condition the spring 46 keeps the indicator 43 in the zero position on the graduated scale 43a, confirming the absence of flow;
- subsequently rotation of the hollow stem 30 (Fig. 5) produces the simultaneous rotation of the obturator 10, which is rotationally constrained to the stem; during its rotational movement the obturator 10 reacts against the screw 10b/female thread 20b and screw 20a/female thread 1b connections which, as a result of the radial projections 13a, cause raising of the obturator in the axial direction with consequent raising of the head 100 (Fig. 5), separation of the annular edge 101 from the seat 2d and opening of the slits 110 and 120;
- during this first step, opening of only the top triangular part 110a of the slit 110 occurs; the fluid entering radially via the slit fills the calming chamber 130, assumes a substantially laminar motion and enters into the branch pipe 2 where it acts on the reaction disk 44, recalling the rod 40 against the action of the spring 46, producing a corresponding displacement of the indicator 43 along the graduated scale 43a (Fig. 5), allowing reading and fine adjustment of the flow rate of the fluid;
- continued rotation of the stem 30 (Fig. 6) causes further axial raising of the head 110 until it produces opening of the bottom part 110b of the first slit and opening of the second slit 120;
- during this step the dimensions of the said slits allow the through-flow of a fluid greater than that occurring at the end of the instrument scale, this condition being particularly useful for example for operations involving filling, washing, draining or the need to produce a high flow rate within the manifold circuit;
in this condition the instrument does not provide a useful indication, being substantially "off scale".

It must be emphasized how, during regulation of the flow rate, the axial displacement of the obturator 10 does not produce a corresponding axial displacement of the measuring instrument.

It is clear, however, how by designing the first slit 110, and in particular its bottom part 110a, with suitable dimensions, it would possible to obtain the maximum flow rate available also with a single slit instead of with two as shown by way of example in the figures.

In addition, the displacement of the annular element 44 towards a larger cross-section of the pipe 2 following an increase in flow rate (greater opening of the valve) produces an increase in the cross-section of the flow in the measurement zone upon an increase in the said flow rate; as a result, it is possible to obtain, in combination with the trapezoidal shape of the slit 110a, a more linear measurement and therefore a more spaced distribution of the display scale on the external surface of the stem, enabling easier and more accurate reading by the user.

Moreover, as a result of the particular circumferential arrangement of the slits 110 and 120 which determine entry of the fluid into the branch pipe in a radial direction, it is possible to avoid having to direct the fluid flow twice in order to arrange it parallel to the longitudinal axis of the valve, as envisaged by the known art in which entry of the fluid occurs in a direction substantially parallel to the axial direction and results in the need for cavitation suppression means such as constrictions and the like.

It is envisaged, moreover, that the regulating and measurement valve according to the invention may be realized with the connecting pipe 2 overturned, namely with the larger base of the frustoconical shape being arranged inside the manifold 1: in this configuration the valve may be arranged on the return pipe of the system and operate with a fluid flow from the return pipe towards the said manifold 1.

The possibility of being able to use the instrument in conjunction with a branch pipe having a frustoconical shape results moreover in self-cleaning of the said pipe during passage of the fluid since any impurities tend to flow out owing to the widened form of the pipe, instead of accumulating as occurs in cylindrical pipes.

## Claims

1. Valve for regulating and measuring the flow rate of a fluid through a manifold (1) and a branch pipe (2,2b) with an entry opening (2b) inside the said manifold and an outlet opening (2c), which comprises flow intercepting means (10,100) having an obturator (10) with a head (100) movable along an axial direction upon operation of associated actuating means (30), means (44) for detecting the pressure exerted by the fluid flow, which are integral with elements (40) movable along said axial direction against an opposing action of resilient means (46) and forming part of an instrument (43,43a) for measuring the flow rate of the fluid, a scale (43a) of which is shown on the external surface of a stem (30) of said actuating means, said means (10,100) for intercepting the fluid flow being connected to the said actuating means (30), said obturator (10) has an external thread (10b) suitable for mating with the female thread (20b) of an union (20) forming the element for connecting the measuring instrument (43;43a) to the manifold (1) and the union being in turn locked onto the said manifold by means of a screw/female thread connection, so that a rotation of the stem (30) produces the sole displacement along the axial direction of the intercepting means (10,100) with no displacement along the axial direction of the stem (30), wherein the circumferential surface of said head (100) has at least one slit (110;110,120) for entry of the fluid into the branch pipe (2) in a direction transversal to the axial direction, **characterized in that** the circumferential surface of said head (100) is provided with an annular edge (101) extending outwards into the transversal direction and able to come into contact with a seat (2d) of the valve so as to produce closing of the latter, **in that** said seat (2d) of the valve is formed coaxially with the entry opening (2b) of the branch pipe (2) and along a diameter greater than the diameter of said entry opening (2b) of the said branch pipe and **in that** said seat (2d) of the valve extends in the axial direction so that the plane corresponding to its free edge lies at a height which is upstream - in the axial direction and in the sense of flow of the fluid - of the height at which the plane corresponding to the free edge of the entry opening (2b) of the branch pipe (2) lies.

2. Valve according to Claim 1, **characterized in that** said at least one slit (110) in the circumferential surface of the head (100) of the obturator (10) has a shape (110a) in the form of an isosceles trapezium.

3. Valve according to Claim 2, **characterized in that** said at least one slit (110) has a base arranged on the side corresponding to the outlet opening (2c) of the branch pipe (2).

4. Valve according to Claim 3, **characterized in that** said at least one slit (110) has a circumferentially widened portion (110b) in its bottom part corresponding to the base.

5. Valve according to Claim 2, **characterized in that** said slit (110) has an aperture able to allow the through-flow of the whole working flow of the valve corresponding to the axial maximum open position.

6. Valve according to Claim 2, **characterized in that** it has at least one additional slit (120).

7. Valve according to Claim 6, **characterized in that** said additional slit (120) has a rectangular shape.

8. Valve according to Claim 6, **characterized in that** the sum of the areas of the said slits (10,120) is such as to produce the passage of the maximum flow of the valve.

9. Valve according to Claim 1, **characterized in that** said branch pipe (2) has a frustoconical shape.

10. Valve according to Claim 9, **characterized in that** the larger base of the frustoconical pipe is arranged on the outlet opening (2c).

11. Valve according to Claim 9, **characterized in that** the larger base of the frustoconical pipe is arranged inside the manifold (1).

12. Valve according to Claim 1, **characterized in that** said means for intercepting the opening of the branch pipe consist of said obturator (10) which has at its free end an internally hollow cylindrical head (100) with a cavity (111) directed towards the branch pipe (2).

13. Valve according to Claim 12, **characterized in that** said obturator (10) has a coaxial through-duct (14).

14. Valve according to Claim 1, **characterized in that** said obturator (10) has an annular seat (13) extending over a suitable distance in the axial direction on the opposite side to that of a cavity of the head (100).

15. Valve according to Claim 14, **characterized in that** said annular seat (13) has radial projections (13a).

16. Valve according to Claim 15, **characterized in that** the end (33) of the stem (30) inside the manifold (1) has longitudinal grooves (30a) suitable for allowing engagement with corresponding annular projections (13a) of the seat (13) of the obturator (10).

17. Valve according to claim 1, **characterized in that** said means for actuating the intercepting means (10,100) consist of an infernally hollow stem (30), the free end of which outside the valve displays the graduated scale (43a) of the measuring instrument (43).

18. Valve according to Claim 1, **characterized in that** said actuating means (30) and obturator (10) are connected to the manifold (1) by means of said union (20) which can be locked to the said manifold by means of a connection consisting of screw (20a) and female thread (1b).

19. Valve according to Claim 18, **characterized in that** said means (30) for actuating the obturator (10) are axially constrained to said union (20) by means of a reaction washer (32) inserted in a special seat of a cover (21) of said union.

## Patentansprüche

1. Ventil zur Regulierung und Messung der Durchflussrate eines Fluids durch eine Rohrverzweigung (1) und ein Zweigrohr (2, 2b) mit einer Eintrittsöffnung (2b) in der genannten Rohrverzweigung (1) und einer Austrittsöffnung (2c), umfassend Mittel zur Unterbrechung des Durchflusses (10, 100) mit einem Absperrorgan (10) mit einem Kopf (100), der bei einer Bedienung eines zugeordneten Stellorgans (30) entlang einer axialen Richtung bewegbar ist, Mittel (44) zur Erfassung des durch den Durchfluss des Fluids ausgeübten Druckes, welche mit entlang der genannten axialen Richtung gegen eine entgegengesetzte Wirkung von elastischen Mitteln (46) bewegbaren Elementen (40) integral sind und einen Teil eines Instrumentes (43, 43a) zur Messung der Durchflussrate des Fluids bilden, eine Skala (43a), welche auf der äusseren Oberfläche eines Schaftes (30) des genannten Stellorgans angezeigt ist, wobei die genannten Mittel (10, 100) zur Unterbrechung des Durchflusses mit dem genannten Stellorgan (30) verbunden sind, das genannte Absperrorgan (10) ein Aussengewinde (10b) hat, welches zur Verbindung mit dem Innengewinde (20b) einer das Element zur Verbindung des Messinstruments (43, 43a) und der Rohrverzweigung (1) bildenden Verbindung (20) geeignet ist, und die Verbindung ihrerseits an der genannten Rohrverzweigung mittels einer Schrauben/Innengewinde-Verbindung fixiert ist, so dass eine Rotation des Schaftes (30) nur die Verschiebung der Mittel zur Unterbrechung des Durchflusses (10, 100) entlang der axialen Richtung ohne Verschiebung des Schaftes (30) entlang der axialen Richtung bewirkt, wobei die Mantelfläche des genannten Kopfes (100) mindestens einen Schlitz (110, 110, 120) für den Eintritt des Fluids in das Zweigrohr (2) in einer zur axialen Richtung quer verlaufenden Richtung hat, **dadurch gekennzeichnet, dass** die Mantelfläche des genannten Kopfes (100) eine ringförmige Kante (101) aufweist, welche sich in der quer verlaufenden Richtung nach aussen erstreckt und für die Berührung mit dem Sitz (2d) des Ventils geeignet ist, um ein Verschliessen des Letzteren herzustellen, dadurch, dass der genannte Sitz (2d) des Ventils koaxial mit der Eintrittsöffnung (2b) des Zweigrohrs (2) und entlang eines Durchmessers, welcher grösser als der Durchmesser der genannten Eintrittsöffnung (2b) des genannten Zweigrohrs ist, ausgebildet ist und dadurch, dass der genannte Sitz (2d) des Ventils sich in der axialen Richtung erstreckt, so dass die Ebene, welche mit seiner freien Kante übereinstimmt, auf einer Höhe liegt, welche stromaufwärts - in der axialen Richtung und in Strömungsrichtung des Fluids - gegenüber der Höhe liegt, bei welcher die Ebene liegt, welche mit der freien Kante der Eintrittsöffnung (2b) des Zweigrohrs (2) übereinstimmt.

2. Ventil nach Anspruch 1, **dadurch gekennzeichnet, dass** der genannte mindestens eine Schlitz (110) in der Mantelfläche des Kopfes (100) des Absperrorgans (10) eine Form (110a) in der Form eines gleichschenkligen Trapezes hat.

3. Ventil nach Anspruch 2, **dadurch gekennzeichnet, dass** der genannte mindestens eine Schlitz (110) eine Basis hat, welche auf der mit der Austrittsöffnung (2c) des Zweigrohrs (2) übereinstimmenden Seite angeordnet ist.

4. Ventil nach Anspruch 3, **dadurch gekennzeichnet, dass** der genannte mindestens eine Schlitz (110) in seinem unterem mit der Basis übereinstimmenden Teil einen am Umfang erweiterten Teil (110b) hat.

5. Ventil nach Anspruch 2, **dadurch gekennzeichnet, dass** der genannte Schlitz (110) eine Öffnung hat, welche so ausgebildet ist, dass der Durchfluss des gesamten, mit der maximal axial offenen Position übereinstimmenden Arbeitsflusses des Ventils ermöglicht wird.

6. Ventil nach Anspruch 2, **dadurch gekennzeichnet, dass** es mindestens einen zusätzlichen Schlitz (120) hat.

7. Ventil nach Anspruch 6, **dadurch gekennzeichnet, dass** der genannte zusätzliche Schlitz (120) eine rechteckige Form hat.

8. Ventil nach Anspruch 6, **dadurch gekennzeichnet, dass** die Summe der Flächen der genannten Schlitze (10, 120) so ist, dass der Durchgang des Maximalflusses des Ventils herstellbar ist.

9. Ventil nach Anspruch 1, **dadurch gekennzeichnet, dass** das genannte Zweigrohr (2) einen kegelstumpfartige Form hat.

10. Ventil nach Anspruch 9, **dadurch gekennzeichnet, dass** die grössere Basis des kegelstumpfartigen Rohres bei der Austrittsöffnung (2c) angeordnet ist.

11. Ventil nach Anspruch 9, **dadurch gekennzeichnet, dass** die grössere Basis des kegelstumpfartigen Rohres in der Rohrverzweigung (1) angeordnet ist.

12. Ventil nach Anspruch 1, **dadurch gekennzeichnet, dass** die genannten Mittel zum Verschluss der Öffnung des Zweigrohrs aus dem genannten Absperrorgan (10) bestehen, welches an seinem freien Ende ein innen hohlen, zylindrischen Kopf (100) mit einem gegen das Zweigrohr (2) gerichteten Hohlraum (111) hat.

13. Ventil nach Anspruch 12, **dadurch gekennzeichnet, dass** das genannte Absperrorgan (10) einen koaxialen Durchgangskanal (14) hat.

14. Ventil nach Anspruch 1, **dadurch gekennzeichnet, dass** das genannte Absperrorgan (10) einen ringförmigen Sitz (13) hat, welcher sich auf der dem Hohlraum des Kopfs (110) gegenüberliegenden Seite über eine geeignete Länge in der axialen Richtung erstreckt.

15. Ventil nach Anspruch 14, **dadurch gekennzeichnet, das** der genannte ringförmige Sitz (13) radiale Vorsprünge (13a) hat.

16. Ventil nach Anspruch 15, **dadurch gekennzeichnet, dass** das Ende (33) des Schafes (30) im Innern der Rohrverzweigung (1) longitudinale Nuten (30a) hat, welche dazu geeignet sind, einen Eingriff mit übereinstimmenden ringförmigen Vorsprüngen (13a) des Sitzes (13) des Absperrorgans (10) zu ermöglichen.

17. Ventil nach Anspruch 1, **dadurch gekennzeichnet, dass** die genannten Mittel zur Betätigung der Mittel zur Unterbrechung (10, 100) aus einem innen hohlen Schaft (30) bestehen, dessen freies Ende ausserhalb des Ventils die eine Teilung aufweisende Skala (43) des Messinstrumentes (43) aufweist.

18. Ventil nach Anspruch 1, **dadurch gekennzeichnet, dass** das genannte Stellorgan (30) und Absperrorgan (10) mit der Rohrverzweigung (1) mittels der genannten Verbindung (20) verbunden sind, welche an der genannten Verbindung mittels einer aus der Schraube (20a) und dem Innengewinde (1 b) bestehenden Verbindung fixiert werden können.

19. Ventil nach Anspruch 18, **dadurch gekennzeichnet, dass** die genannten Mittel (30) zur Betätigung des Absperrorgans (10) an der genannten Verbindung (20) mittels einer in einen Spezialsitz eines Deckels (21) der genannten Verbindung eingefügten Gegendruckscheibe (32) axial eingespannt sind.

## Revendications

1. Vanne pour le réglage et la mesure du débit d'un fluide à travers un collecteur (1) et un tuyau de branchement (2, 2b) ayant une ouverture d'entrée (2b) à l'intérieur dudit collecteur et une ouverture de sortie (2c), laquelle comporte des moyens d'interception de l'écoulement (10, 100) ayant un obturateur (10) doté d'une tête (100) mobile le long d'une direction axiale lors du fonctionnement des moyens d'actionnement associés (30), des moyens (44) permettant de détecter la pression exercée par l'écoulement de fluide, lesquels sont solidaires des éléments (40) mobiles le long de ladite direction axiale contre une action d'opposition des moyens de rappel (46) et faisant partie d'un instrument (43, 43a) pour mesurer le débit du fluide, une échelle (43a) dont la représentation est visible sur la surface externe d'une tige (30) desdits moyens d'actionnement, lesdits moyens (10, 100) permettant d'intercepter l'écoulement de fluide étant connectés aux dits moyens d'actionnement (30), ledit obturateur (10) possède un filetage extérieur (10b) approprié pour s'engrener avec le filetage intérieur (20b) d'une partie de raccordement (20) formant l'élément servant à connecter l'instrument de mesure (43 ; 43a) au collecteur (1) et la partie de raccordement étant, à son tour, verrouillée sur ledit collecteur au moyen d'un raccordement par filetage intérieur/vis, de sorte qu'une rotation de la tige (30) produise l'unique déplacement le long de la direction axiale des moyens d'interception (10, 100) sans aucun déplacement le long de la direction axiale de la tige (30), dans laquelle la surface circonférentielle de ladite tête (100) comporte au moins une fente (110 ; 110, 120) destiné à faire entrer le fluide dans le tuyau de branchement (2) suivant une direction transverse à la direction axiale, **caractérisée en ce que** la surface circonférentielle de ladite tête (100) est prévue avec un bord annulaire (101) s'étendant vers l'extérieur dans la direction transversale et pouvant venir en contact avec un siège (2d) de la vanne de façon à produire la fermeture de cette dernière, **en ce que** ledit siège (2d) de la vanne est formée de façon coaxiale avec l'ouverture d'entrée (2b) du tuyau de branchement (2) et le long d'un diamètre plus grand que le diamètre de ladite ouverture d'entrée (2b) dudit tuyau de branchement et **en ce que** ledit siège (2d) de la vanne s'étend suivant la direction axiale de sorte que le plan correspondant à son bord libre repose au niveau d'une hauteur qui est en amont - dans la direction axiale et dans le sens de l'écoulement du fluide - de la hauteur au niveau de laquelle repose le plan correspondant au bord libre de l'ouverture d'entrée (2b) du tuyau de branchement (2).

2. Vanne selon la revendication 1, **caractérisée en ce que** ladite (lesdites) fente(s) (110) formée(s) dans la surface circonférentielle de la tête (100) de l'obturateur (10) présente une configuration (110a) sous la forme d'un trapèze isocèle.

3. Vanne selon la revendication 2, **caractérisée en ce que** ladite (lesdites) fente(s) (110) comporte(nt) une base agencée sur le côté correspondant à l'ouverture de sortie (2c) du tuyau de branchement (2).

4. Vanne selon la revendication 3, **caractérisée en ce que** ladite (lesdites) fente(s) (110) présente(nt) une partie élargie circonférentiellement (110b) dans sa partie inférieure correspondant à la base.

5. Vanne selon la revendication 2, **caractérisée en ce que** ladite fente (110) comporte une ouverture capable de permettre l'écoulement transverse de la totalité de l'écoulement de fonctionnement de la vanne correspondant à la position d'ouverture maximale axiale.

6. Vanne selon la revendication 2, **caractérisée en ce qu'**elle comporte au moins une fente supplémentaire (120).

7. Vanne selon la revendication 6, **caractérisée en ce que** ladite fente supplémentaire (120) présente une configuration rectangulaire.

8. Vanne selon la revendication 6, **caractérisée en ce que** la somme des surfaces desdites fentes (10, 120) est telle qu'elle fournisse le passage de l'écoulement maximal de la vanne.

9. Vanne selon la revendication 1, **caractérisée en ce que** ledit tuyau de branchement (2) présente une configuration tronconique.

10. Vanne selon la configuration 9, **caractérisée en ce que** la plus grande base du tuyau tronconique est disposée sur l'ouverture de sortie (2c).

11. Vanne selon la revendication 9, **caractérisée en ce que** la plus grande base du tuyau tronconique est disposée à l'intérieur du collecteur (1).

12. Vanne selon la revendication 1, **caractérisée en ce que** lesdits moyens permettant d'intercepter l'ouverture du tuyau de branchement sont constitués dudit obturateur (10), lequel comporte au niveau de son extrémité libre une tête cylindrique creuse à l'intérieur (100) présentant une cavité (111) dirigée vers le tuyau de branchement (2).

13. Vanne selon la revendication 12, **caractérisée en ce que** ledit obturateur (10) comporte un conduit de passage coaxial (14).

14. Vanne selon la revendication 1, **caractérisée en ce que** ledit obturateur (10) comporte une embase annulaire (13) s'étendant sur une distance appropriée dans la direction axiale sur le côté opposé à celui d'une cavité de la tête (100).

15. Vanne selon la revendication 14, **caractérisé en ce que** ladite embase annulaire (13) possède des parties radiales en saillie (13a).

16. Vanne selon la revendication 15, **caractérisée en ce que** l'extrémité (33) de la tige (30) à l'intérieur du collecteur (1) comporte des gorges longitudinales (30a) appropriées pour permettre un engagement avec les parties en saillie annulaires correspondantes (13a) de l'embase (13) de l'obturateur (10).

17. Vanne selon la revendication 1, **caractérisée en ce que** lesdits moyens permettant d'actionner les moyens d'interception (10, 100) sont constitués d'une tige creuse à l'intérieur (30), dont l'extrémité libre à l'extérieur à la vanne affiche l'échelle graduée (43a) de l'instrument de mesure (43).

18. Vanne selon la revendication 1, **caractérisée en ce que** lesdits moyens d'actionnement (30) et ledit obturateur (10) sont connectés au collecteur (1) au moyen de ladite partie de raccordement (20) qui peut être verrouillée sur ledit collecteur au moyen d'un raccordement constitué d'une vis (20a) et d'un filetage intérieur (1 b).

19. Vanne selon la revendication 18, **caractérisée en ce que** lesdits moyens (30) permettant d'actionner l'obturateur (10) sont serrés à force axialement sur ladite partie de raccordement (20) au moyen d'une rondelle de réaction (32) insérée dans une embase spéciale d'un couvercle (21) de ladite partie de raccordement.
